# EUROPÄISCHE PATENTSCHRIFT

(11) **EP 1 624 297 B1**
(45) Veröffentlichungstag und Bekanntmachung des Hinweises auf die Patenterteilung: **13.07.2011**
(21) Anmeldenummer: 05015679.3
(22) Anmeldetag: 19.07.2005
(51) Int. Cl.: G01N 17/00, G01J 3/28

(54) **Bewitterungsvorrichtung mit UV-Strahlungsquellen und Strahlungssensoren enthaltend einen zweifach kalibrierten UV-Sensor**
Weathering device comprising UV radiation sources and radiation sensors comprising a double-calibrated UV sensor
Dispositif d'exposition aux agents atmosphériques muni de sources de rayonnement UV et de capteurs de rayonnement contenant un capteur UV doublement calibré

(30) Priorität: 03.08.2004 DE 102004037602
(43) Veröffentlichungstag der Anmeldung: 08.02.2006
(73) Patentinhaber: Atlas Material Testing Technology GmbH, 63589 Linsengericht/Altenhasslau (DE)
(72) Erfinder: Schönlein, Arthur, 65428 Rüsselsheim (DE); March, Peter, 60326 Frankfurt am Main (DE)
(74) Vertreter: Patentanwälte Lambsdorff & Lange

(56) Entgegenhaltungen:
- EP-A- 1 248 097
- DE-A1- 2 043 217
- DE-A1- 2 940 325
- US-A- 5 206 518

## Beschreibung

Die vorliegende Erfindung betrifft eine Bewitterungsvorrichtung nach dem Oberbegriff des Patentanspruchs 1.

In einer Bewitterungsvorrichtung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Die Bewitterungsvorrichtung weist zu diesem Zweck üblicherweise eine Bewitterungskammer auf, in welcher Halterungsmittel für die Halterung von zu bewitternden Proben und eine oder mehrere Strahlungsquellen zur Beaufschlagung der Proben mit Strahlung, insbesondere mit UV-Strahlung, angeordnet sind.

In derartigen Vorrichtungen zur künstlichen Bewitterung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle Xenon-Strahler eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsvorrichtungen werden wahlweise eine oder mehrere UV-Strahlungsquellen wie Xenon-Strahlungsquellen eingesetzt. Mit diesen kann bekanntermaßen das gesamte Sonnenspektrum recht gut simuliert werden, wobei der relativ hohe Spektralanteil im infraroten Spektralbereich durch geeignete IR-Filter abgeschwächt werden kann.

Die von den UV-Strahlungsquellen abgegebene Strahlungsleistung wird von UV-Sensoren gemessen, wobei vorgesehen sein kann, dass jeder UV-Strahlungsquelle ein eigener UV-Sensor zugeordnet ist. Das Ausgangssignal der UV-Sensoren wird einer Steuer- und Aufzeichnungseinrichtung zugeführt, in der die UV-Strahlungsleistungen während eines Bewitterungsvorgangs aufgezeichnet werden können. Außerdem können die Ausgangssignale der UV-Sensoren einer Regeleinrichtung zugeführt werden, mit der die den Leistungsversorgungs-Einrichtungen der UV-Strahlungsquellen zuzuführende elektrische Leistung im Hinblick auf konstante UV-Strahlungsleistungen geregelt werden kann.

Es ist bekannt, in Bewitterungsvorrichtungen breitbandige UV-Sensoren einzusetzen, die einen Empfindlichkeitsbereich gemäß dem IS-Standard im Bereich 300 nm bis 400 nm aufweisen. Vielfach tritt jedoch auch das Bedürfnis auf, Bewitterungsvorgänge hinsichtlich der Messung der UV-Strahlungsleistung mit dem NB-Standard durchzuführen. In diesem Standard sind Messungen der Strahlungsleistung wahlweise in den zwei schmalbandigen Bereichen 340 nm ± 10 nm oder 420 nm ± 10 nm vorgesehen, wobei letzter Bereich außerhalb des UV im sichtbaren blauen Spektralbereich liegt. Im Stand der Technik gibt es jedoch nur Sensoren, die für jeweils einen der bisher genannten drei Empfindlichkeitsbereiche kalibriert sind. Wenn demnach gewünscht wird, von einem Bewitterungsvorgang zum nächsten Bewitterungsvorgang einen anderen Standard für die Strahlungsleistungsmessung heranzuziehen, insbesondere einen anderen Empfindlichkeitsbereich zugrunde zu legen, so müssen entweder die Sensoren ausgetauscht werden oder, falls dies nicht möglich ist, muss eine andere Bewitterungsvorrichtung eingesetzt werden.

Ein Wechsel des Standards für die Messung der Strahlungsleistung ist demnach im Stand der Technik mit erheblichem Aufwand und Mehrkosten verbunden.

Die Druckschrift US-A-5,206,518 beschreibt eine Bewitterungsvorrichtung mit einer Anzahl von UV-Strahlungsquellen und einer Anzahl von UV-Sensoren, wobei jeweils einem Paar von UV-Strahlungsquellen ein UV-Sensor zugeordnet ist, der im Wesentlichen nur die Strahlung der zugeordneten Strahlungsquellen detektiert.

Die Druckschrift DE 29 40 325 A1 offenbart eine Bewitterungsvorrichtung mit einer UV-Strahlungsquelle und UV-Sensoren, wobei die UV-Sensoren als Dioden-Array ausgebildet sind und die einzelnen Dioden unterschiedliche Empfindlichkeitsbereiche haben können.

Es ist demgemäß Aufgabe der vorliegenden Erfindung, eine Bewitterungsvorrichtung anzugeben, die mit verhältnismäßig geringem Aufwand die Durchführung von Bewitterungsvorgängen mit verschiedenen Leistungsmessungs-Standards erlaubt.

Diese Aufgabe wird durch die kennzeichnenden Merkmale des Patentanspruchs 1 gelöst. Diese Aufgabe wird ebenfalls durch die kennzeichnenden Merkmale des nebengeordneten Patentanspruchs 2 gelöst. Vorteilhafte Weiterbildungen und Ausgestaltungen sind Gegenstand von Unteransprüchen.

Eine erfindungsgemäße Bewitterungsvorrichtung gemäß der vorliegenden Erfindung weist eine oder mehrere UV-Strahlungsquellen und einen oder mehrere erste Sensoren auf, die für einen ersten spektralen Empfindlichkeitsbereich im UV kalibriert sind und jeweils ein Ausgangssignal erzeugen, welches für die im ersten Empfindlichkeitsbereich empfangene Strahlungsleistung repräsentativ ist. Einer der ersten Sensoren ist zusätzlich für einen innerhalb des ersten spektralen Empfindlichkeitsbereich liegenden spektralen Bereich kalibriert und die Bewitterungsvorrichtung ist eingerichtet, um mit Hilfe der Kalibrierungen Strahlungsleistungsdaten in den entsprechenden Spektralbereichen zu ermitteln.

Der erste Empfindlichkeitsbereich kann ein breitbandiger Bereich von 300 nm bis 400 nm sein. Der in ihm enthaltene spektrale Bereich kann dabei von 330 nm bis 350 nm reichen und entspricht somit dem in dem NB-Standard vorgesehenen Messbereich von 340 nm ± 10 nm.

Es kann auch vorgesehen sein, dass neben dem oder den ersten Sensor(en) ein zweiter Sensor vorgesehen ist, welcher für einen zweiten spektralen Empfindlichkeitsbereich kalibriert ist.

Dieser zweite spektrale Empfindlichkeitsbereich kann von 410 nm bis 430 nm reichen und entspricht somit dem in dem NB-Standard ebenfalls vorgesehenen Messbereich von 420 nm ± 10 nm. Dieser Bereich liegt außerhalb des UV im sichtbaren blauen Spektralbereich. Eine Messung in diesem Bereich macht somit von dem Umstand Gebrauch, dass bestimmte UV-Strahlungsquellen auch im angrenzenden sichtbaren Spektralbereich emittieren und die Strahlungsleistung in diesem Messbereich in einem konstanten Verhältnis zur Strahlungsleistung im UV-Bereich steht.

Eine vorteilhafte Ausgestaltung der Erfindung besteht darin, dass die Bewitterungsvorrichtung eine Mehrzahl von UV-Strahlungsquellen aufweist, denen jeweils einer der ersten Sensoren zugeordnet ist und im Wesentlichen nur die UV-Strahlung der jeweils zugeordneten UV-Strahlungsquelle detektiert. Die Bewitterungsvorrichtung kann beispielsweise zwei oder drei oder auch mehr als drei UV-Strahlungsquellen und eine entsprechende Anzahl von ersten Sensoren aufweisen, die jeweils derart angeordnet sind, dass durch sie nur die Strahlung der jeweils zugeordneten Strahlungsquelle erfasst wird.

Im Falle von drei UV-Strahlungsquellen in der Bewitterungsvorrichtung genügt - wie noch zu sehen sein wird- der Einsatz von vier Sensoren, um die weiter vorne genannten drei Empfindlichkeitsbereiche messtechnisch zu erfassen, während hierfür in konventionellen Geräten insgesamt neun Sensoren nötig gewesen wären.

Erfindungsgemäß kann jedoch auch vorgesehen sein, dass die Bewitterungsvorrichtung lediglich eine einzelne UV-Strahlungsquelle aufweist. In der Bewitterungsvorrichtung kann dann genau ein erster Sensor angeordnet sein und dieser erste Sensor ist zusätzlich für den innerhalb des ersten Empfindlichkeitsbereichs liegenden spektralen Bereich kalibriert. Zusätzlich oder alternativ dazu kann dann ein zweiter Sensor vorgesehen sein, so dass in einem solchen Fall insgesamt zwei Sensoren vorhanden wären.

Falls, wie vorstehend beschreiben, ein zweiter Sensor vorhanden ist, so kann der zweite Sensor einer bestimmten UV-Strahlungsquelle (Referenz-Strahlungsquelle) von mehreren UV-Strahlungsquellen zugeordnet sein und im Wesentlichen nur die von dieser zugeordneten UV-Strahlungsquelle emittierte Strahlung im zweiten Empfindlichkeitsbereich detektieren. Mit Hilfe dieses zweiten Sensors können dann auch die Strahlungsleistungen der anderen UV-Strahlungsquellen im zweiten spektralen Empfindlichkeitsbereich aus dem Ausgangssignal ihres zugehörigen ersten Sensors und den Ausgangssignalen des ersten und des zweiten Sensors der Referenz-Strahlungsquelle abgeleitet werden.

Gemäß einer weiteren vorteilhaften Ausführungsform weist die erfindungsgemäße Bewitterungsvorrichtung eine Bewitterungskammer auf, in der die UV-Strahlungsquellen und die Sensoren untergebracht sind, wobei die UV-Strahlungsquellen entlang einer ersten Wand der Bewitterungskammer und die zu bewitternden Proben entlang einer der ersten Wand gegenüberliegenden zweiten Wand angeordnet sind, und an einer die erste und die zweite Wand verbindenden dritten Wand die Sensoren angebracht, insbesondere in Öffnungen der dritten Wand eingesetzt sind.

Dabei sind die Sensoren vorzugsweise derart eingesetzt, dass sie in schrägem Winkel auf die ihnen jeweils zugeordneten UV-Strahlungsquellen ausgerichtet sind.

Im Folgenden wird ein Ausführungsbeispiel der vorliegenden Erfindung anhand der Zeichnungsfiguren näher erläutert. Es zeigen:
- Fig. 1: eine Ausführungsform einer erfindungsgemäßen Bewitterungsvorrichtung;
- Fig. 2: die spektrale Lage der in dem IS- und dem NB-Standard vorgesehenen drei Messbereiche.

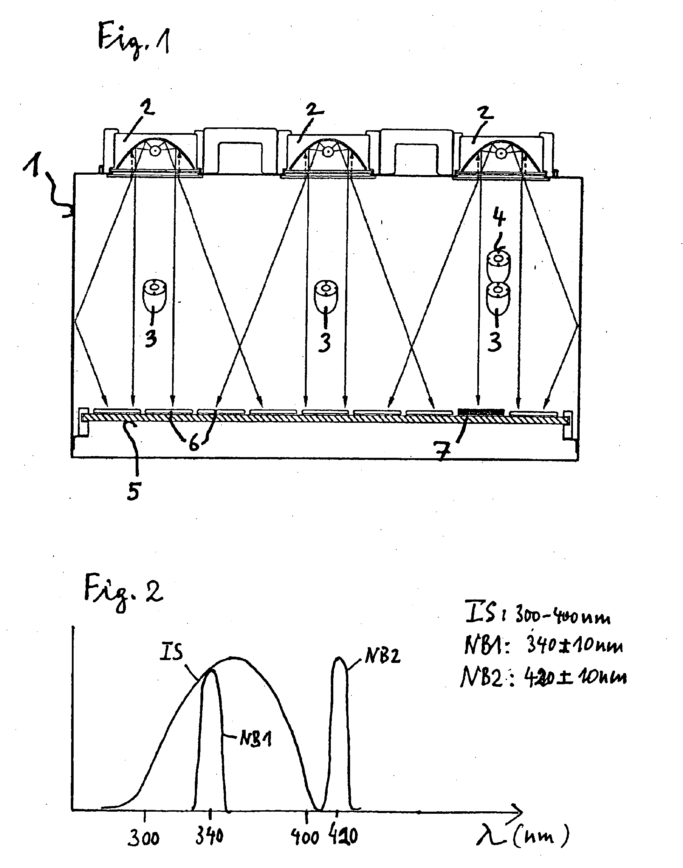

In der Fig. 1 ist eine Bewitterungsvorrichtung in einem Längsschnitt durch eine Bewitterungskammer 1 dargestellt. In einer Längswand der Bewitterungskammer 1 sind Öffnungen vorgesehen, in denen UV-Strahlungsquellen 2 eingesetzt sind. Die UV-Strahlungsquellen 2 werden im vorliegenden Fall durch Xenon-Strahlungsquellen gebildet. In jeder Strahlungsquelle 2 sind in bekannter Weise die mit Xenon gefüllten Entladungsröhren von metallischen Reflektoren umgeben, so dass die von der Strahlungsquelle 2 emittierte Strahlung nahezu vollständig in das Innere der Bewitterungskammer 1 gelangt. Vor die Strahlungsquellen 2 können Infrarotfilter gesetzt werden, welche den relativ hohen Infrarotanteil des von Xenon-Lampen emittierten Spektrums zurückhalten. Die Innenwände der Bewitterungskammer 1 sind vorteilhafterweise mit Aluminium beschichtet, um den Reflektionsgrad im UV-Bereich zu erhöhen und somit die an den Innenwänden reflektierte UV-Strahlung ebenfalls zur Beaufschlagung der Proben zu nutzen.

Als UV-Strahlungsquellen können anstelle von Xenon-Lampen auch Halogen-Lampen, insbesondere Metall-Halogen-Lampen, oder Fluoreszenz-Lampen oder UV-Lichtemissionsdioden verwendet werden.

Gegenüberliegend den UV-Strahlungsquellen 2 befindet sich eine in der Bewitterungskammer 1 befestigte Aufnahmeplatte 5 für die Aufnahme und Halterung von zu bewitternden Werkstoffproben 6 und Temperatursensoren wie eines Schwarztafel- oder Schwarzstandard-Sensors 7. Der Strahlengang der von den UV-Strahlungsquellen 2 emittierten Strahlung ist mittels Pfeilen dargestellt. In der Ebene der Werkstoffproben 5 ergibt sich eine räumlich nahezu konstante Strahlungsleistung.

Für die Messung der UV-Strahlungsleistung sind Sensoren 3 und 4 vorgesehen, die in Öffnungen einer Wand der Bewitterungskammer 1 eingesetzt sind, die senkrecht zu der die UV-Strahlungsquellen 2 tragenden Wand der Bewitterungskammer 1 liegt. Die Sensoren 3 und 4 sind somit in schrägem Winkel auf die UV-Strahlungsquellen 2 ausgerichtet.

Die Bewitterungsvorrichtung weist im vorliegenden Ausführungsbeispiel drei UV-Strahlungsquellen 2 auf. Jeder der drei UV-Strahlungsquellen 2 ist jeweils ein breitbandiger UV-Sensor 3 zugeordnet, der einen Empfindlichkeitsbereich von 300 nm bis 400 nm aufweist und dessen Ausgangssignal somit ein Maß für die von der jeweils zugeordneten UV-Strahlungsquelle 2 in diesem spektralen Bereich emittierte Strahlungsleistung ist.

Die Bewitterungsvorrichtung kann somit Bewitterungsvorgänge bei fortlaufender Messung der UV-Strahlungsleistung im IS-Standard, d.h. für die UV-Bandbreite 300 nm bis 400 nm durchführen. Erfindungsgemäß soll sie aber in die Lage versetzt werden, den Bewitterungsvorgang auch mit anderen Strahlungsleistungsdaten in anderen Bandbreiten messtechnisch zu erfassen. Zu diesem Zweck ist einer der UV-Sensoren 3 nicht nur für den Bereich 300 nm bis 400 nm sondern zusätzlich für den innerhalb dieses spektralen Bereichs liegenden spektralen Bereich 330 nm bis 350 nm kalibriert. In der Fig. 2 sind der Empfindlichkeitsbereich der UV-Sensoren 3 und der in diesem enthaltene spektrale Bereich 340 nm ± 10 nm durch die Kurven IS und NB1 dargestellt. Der betreffende UV-Sensor 3 ist beispielsweise zuvor mittels einer UV-Strahlungsquelle und eines schmalbandigen UV-Sensors für den Bereich 330 nm bis 350 nm derart kalibriert worden, dass aus seinem Ausgangssignal für den breitbandigen Bereich ein Umrechnungsfaktor für die Strahlungsleistung im schmalbandigen Bereich bestimmt wird. Dieser Umrechnungsfaktor kann sich bei dieser Kalibrierung als konstante Größe herausstellen; es kann jedoch auch sein, dass der Umrechnungsfaktor eine veränderliche Größe ist, so dass bei jedem Ausgangssignal des UV-Sensors 3 für den breitbandigen Bereich ein anderer Umrechnungsfaktor für die Berechnung der Strahlungsleistung im schmalbandigen Bereich anzuwenden ist.

Die Kalibrierung des betreffenden UV-Sensors 3 kann dabei ebenfalls mittels einer der UV-Strahlungsquellen 2 innerhalb der Bewitterungskammer 1 der Bewitterungsvorrichtung erfolgen, wobei der UV-Sensor 3 und ein schmalbandiger UV-Sensor für den Bereich 330 nm bis 350 nm der UV-Strahlung einer der UV-Strahlungsquellen ausgesetzt werden und die Ausgangssignale der UV-Sensoren miteinander verglichen werden, während die Strahlungsleistung der UV-Strahlungsquelle verändert wird und somit der Umrechnungsfaktor bestimmt wird.

Diese an einem der UV-Sensoren 3 vorab vorgenommene Kalibrierung auf den Bereich 340 nm ± 10 nm kann während einem Bewitterungsvorgang dann auch für die anderen UV-Sensoren 3 verwendet werden, wobei deren Ausgangssignal für den breitbandigen Bereich mittels des Umrechnungsfaktors auf eine Strahlungsleistung im schmalbandigen Bereich umgerechnet wird. Somit kann mit den vorhandenen drei UV-Sensoren 3 ein Bewitterungsvorgang durchgeführt und dabei die UV-Strahlungsleistung der drei UV-Sensoren 3 in dem breitbandigen Bereich oder dem schmalbandigen Bereich aufgezeichnet werden.

Zusätzlich oder alternativ dazu kann die Möglichkeit geschaffen werden, die UV-Strahlungsleistung in einem schmalbandigen Bereich bei 420 nm ± 10 nm gemäß dem NB-Standard aufzuzeichnen. Dieser Bereich liegt außerhalb des-UV und des breitbandigen Empfindlichkeitsbereichs 300 nm bis 400 nm der UV-Sensoren 3, wie in Fig. 2 anhand der Kurve NB2 zu sehen ist. Daher wird ein zusätzlicher Sensor 4, der einen Empfindlichkeitsbereich 410 nm bis 430 nm aufweist, innerhalb der Bewitterungskammer 1 angeordnet und derart positioniert, dass er nur die Strahlung einer bestimmten UV-Strahlungsquelle 2 erfasst. Er kann, wie dargestellt, in einer Öffnung der Seitenwand platziert werden, so dass er oberhalb des dieser UV-Strahlungsquelle 2 zugeordneten UV-Sensors 3 positioniert ist und wie dieser in schrägem Winkel auf die UV-Strahlungsquelle 2 ausgerichtet ist. Diese zwei Sensoren 3 und 4 messen somit während eines Bewitterungsvorgangs die von der ihnen zugeordneten UV-Strahlungsquelle 2 emittierte Strahlungsleistung in dem breitbandigen und dem schmalbandigen Bereich. Diese UV-Strahlungsquelle dient gewissermaßen als Referenz-Strahlungsquelle. Den anderen UV-Strahlungsquellen 2 sind nur die breitbandigen UV-Sensoren 3 zugeordnet, so dass von diesen zunächst nur die Strahlungsleistung im breitbandigen Bereich direkt gemessen wird. Aus der von ihnen gemessenen breitbandigen Strahlungsleistung kann jedoch auf die Strahlungsleistung im schmalbandigen Bereich geschlossen werden, indem die von dem ersten Sensor 3 und dem zweiten Sensor 4 der Referenz-Strahlungsquelle gemessenen Strahlungsleistungen UV₃₀₀₋₄₀₀ und VIS₄₂₀ ins Verhältnis gesetzt und auf die breitbandige Strahlungsleistung angewandt, insbesondere mit dieser multipliziert, werden. Innerhalb gewisser Toleranzen existiert ein festes Verhältnis von VIS_{420/}UV₃₀₀₋₄₀₀. Mit diesem bei der Referenz-Strahlungsquelle ermittelten Wert können die UV₃₀₀₋₄₀₀-Werte der anderen Strahlungsquellen multipliziert werden, um deren VIS₄₂₀-Werte zu berechnen.

Somit kann durch Einsatz nur eines zusätzlichen Sensors 4 die Aufzeichnung der Strahlungsleistungen der UV-Strahlungsquellen 2 während eines Bewitterungsvorgangs gemäß dem NB-Standard auch für den schmalbandigen UV-Bereich 420 nm ± 10 nm erfolgen.

Im beschriebenen Ausführungsbeispiel genügen also nur 4 Sensoren anstelle von 9 Sensoren wie beim Stand der Technik. Allgemein gesagt, können bei N Strahlungsquellen von 3N im Stand der Technik notwendigen Sensoren erfindungsgemäß 2N-1 Sensoren eingespart werden, da nur N+1 Sensoren benötigt werden.

## Patentansprüche

1. Bewitterungsvorrichtung mit
- einer oder mehrerer UV-Strahlungsquellen (2) und
- einem oder mehreren ersten Sensoren (3), die für einen ersten spektralen Empfindlichkeitsbereich im UV kalibriert sind und jeweils ein Ausgangssignal erzeugen, welches für die im ersten Empfindlichkeitsbereich empfangene Strahlungsleistung repräsentativ ist,
**dadurch gekennzeichnet, dass**
- einer der ersten Sensoren (3) zusätzlich für einen innerhalb des ersten, spektralen Empfindlichkeitsbereichs liegenden spektralen Bereich kalibriert ist, und
- die Bewitterungsvorrichtung eingerichtet ist, um mit Hilfe der Kalibrierungen Strahlungsleistungsdaten in dem ersten spektralen Empfindlichkeitsbereich und in dem innerhalb des ersten spektralen Empfindlichkeitsbereichs liegenden spektralen Bereich zu ermitteln.

2. Bewitterungsvorrichtung nach Anspruch 1,
**dadurch gekennzeichnet, dass**
- ein zweiter Sensor (4) vorgesehen ist, welcher für einen zweiten spektralen Empfindlichkeitsbereich kalibriert ist.

3. Bewitterungsvorrichtung nach Anspruch 1 oder 2, **dadurch gekennzeichnet, dass**
- der erste Empfindlichkeitsbereich von 300 nm bis 400 nm reicht.

4. Bewitterungsvorrichtung nach einem der Ansprüche 1 bis 3, **dadurch gekennzeichnet, dass**
- der innerhalb des Empfindlichkeitsbereichs liegende spektrale Bereich von 330 nm bis 350 nm reicht.

5. Bewitterungsvorrichtung nach Anspruch 2,
**dadurch gekennzeichnet, dass**
- der zweite spektrale Empfindlichkeitsbereich von 410 nm bis 430 nm reicht.

6. Bewitterungsvorrichtung nach einem der vorhergehenden Ansprüche,
**dadurch gekennzeichnet, dass**
- mindestens zwei, insbesondere drei, UV-Strahlungsquellen (2) vorgesehen sind, denen jeweils einer der ersten Sensoren (3) zugeordnet ist und im Wesentlichen nur die UV-Strahlung der jeweils zugeordneten UV-Strahlungsquelle (2) detektiert.

7. Bewitterungsvorrichtung nach den Ansprüchen 2 und 6 da **durch gekennzeichnet**, dass
- der zweite Sensor (4) einer als Referenz-Strahlungsquelle dienenden UV-Strahlungsquelle (2) zugeordnet ist und im Wesentlichen nur die Strahlung der Referenz-Strahlungsquelle (2) detektiert.

8. Bewitterungsvorrichtung nach Anspruch 7,
**dadurch gekennzeichnet, dass**
- die Strahlungsleistung einer UV-Strahlungsquelle (2) im zweiten spektralen Empfindlichkeitsbereich aus dem Ausgangssignal ihres zugeordneten ersten Sensors (3) und den Ausgangssignalen des ersten Sensors (3) und des zweiten Sensors (4) der Referenz-Strahlungsquelle (2) ableitbar ist.

9. Bewitterungsvorrichtung nach einem der vorhergehenden Ansprüche,
**dadurch gekennzeichnet, dass**
- sie eine Bewitterungskammer (1) aufweist, in der die UV-Strahlungsquellen (2) und die UV-Sensoren (3) untergebracht sind, wobei
- die UV-Strahlungsquellen (2) entlang einer ersten Wand der Bewitterungskammer und die zu bewitternden Proben entlang einer der ersten Wand gegenüberliegenden zweiten Wand angeordnet sind, und
- an einer die erste und die zweite Wand verbindenden dritten Wand die UV-Sensoren (3, 4) angebracht, insbesondere in Öffnungen der dritten Wand eingesetzt sind.

10. Bewitterungsvorrichtung nach Anspruch 9,
**dadurch gekennzeichnet, dass**
- die zu bewitternden Proben von der zweiten Wand oder einer Aufnahmeplatte (5) gehaltert werden.

## Claims

1. Weathering apparatus having
- one or more UV radiation sources (2) and
- one or more first sensors (3), which are calibrated for a first spectral sensitivity range in the UV and each produce an output signal which is representative of the radiation power received in the first sensitivity range,
**characterized in that**
- one of the first sensors (3) is additionally calibrated for a spectral range which is located within the first spectral sensitivity range, and
- the weathering apparatus is arranged to determine radiation power data in the first spectral sensitivity range and in the spectral range located within the first spectral sensitivity range by means of the calibrations.

2. Weathering apparatus according to claim 1,
**characterized in that**
- a second sensor (4) is provided, which is calibrated for a second spectral sensitivity range.

3. Weathering apparatus according to claim 1 or 2,
**characterized in that**
- the first sensitivity range extends from 300 nm to 400 nm.

4. Weathering apparatus according to one of claims 1 to 3,
**characterized in that**
- the spectral range located within the sensitivity range extends from 330 nm to 350 nm.

5. Weathering apparatus according to claim 2,
**characterized in that**
- the second spectral sensitivity range extends from 410 nm to 430 nm.

6. Weathering apparatus according to one of the preceding claims,
**characterized in that**
- at least two, in particular three, UV radiation sources (2) are provided, one of which is in each case associated with one of the first sensors (3) and detects essentially only the UV radiation from the respectively associated UV radiation source (2).

7. Weathering apparatus according to claims 2 and 6,
**characterized in that**
- the second sensor (4) is associated with a UV radiation source (2) that is used as a reference radiation source, and detects essentially only the radiation from the reference radiation source (2).

8. Weathering apparatus according to claim 7,
**characterized in that**
- the radiation power from a UV radiation source (2) in the second spectral sensitivity range is derivable from the output signal from its associated first sensor (3) and the output signals from the first sensor (3) and from the second sensor (4) of the reference radiation source (2).

9. Weathering apparatus according to one of the preceding claims,
**characterized in that**
- the weathering apparatus comprises a weathering chamber (1) in which the UV radiation sources (2) and the UV sensors (3) are accommodated, wherein
- the UV radiation sources (2) are arranged along a first wall of the weathering chamber (1), and the samples to be weathered are arranged along a second wall, which is opposite the first wall, and
- the UV sensors (3, 4) are fitted to a third wall, which connects the first wall and the second wall, and in particular are inserted into openings in the third wall.

10. Weathering apparatus according to claim 9,
**characterized in that**
- the samples to be weathered are held by the second wall or by a holding plate (5).

## Revendications

1. Dispositif pour l'exposition artificielle aux intempéries / le vieillissement artificiel, comprenant :
- une ou plusieurs sources de rayonnement ultraviolet (UV) (2) et
- un ou plusieurs premiers capteurs (3) qui sont calibrés pour une première plage de sensibilité spectrale dans la plage ultraviolette (UV) et qui génèrent respectivement un signal de sortie, lequel est représentatif pour la puissance de rayonnement reçue dans la première plage de sensibilité.

2. Dispositif pour l'exposition artificielle aux intempéries / le vieillissement artificiel selon la revendication 1,
**caractérisé en ce que** :
- un second capteur (4) qui est calibré pour une seconde plage de sensibilité spectrale est prévu.

3. Dispositif pour l'exposition artificielle aux intempéries / le vieillissement artificiel selon l'une ou l'autre des revendications 1 et 2,
**caractérisé en ce que** :
- la première plage de sensibilité s'étend de 300 nm à 400 nm.

4. Dispositif pour l'exposition artificielle aux intempéries / le vieillissement artificiel selon l'une des revendications 1 à 3,
**caractérisé en ce que** :
- la plage spectrale qui se trouve à l'intérieur de la plage de sensibilité s'étend de 330 nm à 350 nm.

5. Dispositif pour l'exposition artificielle aux intempéries / le vieillissement artificiel selon la revendication 2,
**caractérisé en ce que** :
- la seconde plage de sensibilité spectrale s'étend de 410 nm à 430 nm.

6. Dispositif pour l'exposition artificielle aux intempéries / le vieillissement artificiel selon l'une des revendications précédentes,
**caractérisé en ce que** :
- au moins deux, en particulier trois, sources de rayonnement ultraviolet (UV) (2) sont prévues, auxquelles est attribué respectivement un des premiers capteurs (3), et **en ce que** seulement le rayonnement ultraviolet (UV) de la source de rayonnement ultraviolet (UV) attribuée respectivement est sensiblement détecté.

7. Dispositif pour l'exposition artificielle aux intempéries / le vieillissement artificiel selon les revendications 2 et 6,
**caractérisé en ce que** :
- le second capteur (4) est attribué à une source de rayonnement ultraviolet (UV) (2) qui sert de source de rayonnement de référence et **en ce que** seulement le rayonnement de la source de rayonnement de référence (2) est sensiblement détecté.

8. Dispositif pour l'exposition artificielle aux intempéries / le vieillissement artificiel selon la revendication 7,
**caractérisé en ce que** :
- la puissance de rayonnement d'une source de rayonnement ultraviolet (UV) (2) dans la seconde plage de sensibilité spectrale peut être déduite à partir du signal de sortie de son premier capteur attribué (3) et des signaux de sortie du premier capteur (3) et du second capteur (4) de la source de rayonnement de référence (2).

9. Dispositif pour l'exposition artificielle aux intempéries / le vieillissement artificiel selon l'une des revendications précédentes,
**caractérisé en ce que** :
- il présente une chambre d'exposition aux intempéries / de vieillissement (1) dans laquelle les sources de rayonnement ultraviolet (UV) (2) et les capteurs ultraviolets (UV) (3) sont logés, et dans lequel
- les sources de rayonnement ultraviolet (UV) (2) sont agencées le long d'une première paroi de la chambre d'exposition aux intempéries / de vieillissement et les échantillons qui doivent être exposés aux intempéries / vieillis sont agencés le long d'une seconde paroi opposée à la première paroi, et
- les capteurs ultraviolets (UV) (3, 4) sont montés sur une troisième paroi qui relie la première et la seconde paroi, et sont mis en place en particulier dans des ouvertures de la troisième paroi.

10. Dispositif pour l'exposition artificielle aux intempéries / le vieillissement artificiel selon la revendication 9,
**caractérisé en ce que** :
- les échantillons qui doivent être exposés aux intempéries / vieillis sont soutenus par la seconde paroi ou par une plaque de réception (5).
